# EUROPEAN PATENT APPLICATION

(11) **EP 1 359 241 A1**
(43) Date of publication of application: **05.11.2003**
(21) Application number: 03005609.7
(22) Date of filing: 12.03.2003
(51) Int. Cl.: D04H 13/00, B32B 5/14, C11D 17/00

(54) **Method for the production of a multi-layer non-woven fabric material provided with at least one layer with areas having a different fibre density, non-woven fabric material produced with said method and moistened cloth prepared with this material, in particular for cleaning floors**

(30) Priority: 14.03.2002 IT MI20020543
(71) Applicant: Maranghi Marco, 59100 Prato (IT)
(72) Inventor: Maranghi Marco, 59100 Prato (IT)
(74) Representative: Petruzziello, Aldo

(57) **Abstract**

A multi-layer, non-woven fabric material (1), comprising a support layer (2) and a cleaning layer (3) having a different fibre density suitable to confer to the layer (2) the capacity of retaining a cleaning fluid and of giving mechanical strength to the material (1) and to the layer (3) an action of controlled release of the fluid coming from the support layer (2).

## Description

The present invention refers to a method suitable for producing a multi-layer non-woven fabric material, provided with at least one layer that includes areas having a differentiated fibre density. The invention also extends to the material obtained with this method, as well as to the moistened cloth produced with this material, in particular for cleaning floors.

The field of the invention is that of moistened cloths that are used to clean floors. These cloths traditionally consist of a non-woven fabric material, pre-impregrated with a cleaning fluid.

Floor cloths of the type recalled above must meet with at least the following requirements: on the one hand they must slow as much as possible the releasing of the cleaning fluid with which they are impregnated, on the other hand they must efficiently remove dirt from the surface to be cleaned. Moreover, the first of these requirements is directly linked to the second, because the slowing of the release of fluid, besides extending the life of the cloth, also maintains that mean level of moistness thereof that is efficacious for achieving more incisive removal of dirt by the cloth.

Traditional moistened floor cloths have the drawback of releasing the fluid too copiously and rapidly, with all the relative negative consequences: short life of the cloth and reduced efficacy thereof since the first use and with very rapid deterioration over the time.

The principal object of the present invention is to provide a method suitable for producing a moistened cloth, in particular for cleaning floors, that allows the life of the cloth to be considerably extended and the performance to be increased, with respect to prior embodiments known in the sector.

This and other objects are achieved with the method and the non-woven fabric material of independent claims 1 and 6, respectively. Preferred embodiments of the invention are disclosed by the other claims.

Thus, with the method of the invention a multi-layer non-woven fabric material is produced, suitable for preparing moistened cloths, in particular for cleaning floors, said cloth having at least two layers, that is at least one layer for retaining the cleaning fluid and for supporting the other layer or layers, and at least one cleaning layer which provides the controlled release of the liquid toward the surface to be cleaned. In particular, the latter layer, which is the one destined to come into contact with the surface to be cleaned, has areas formed of fibres having a lower density than the fibres that form the above mentioned support layer, said areas being alternated with areas of bonding or fixing to said support layer. The described structure of the cloth with areas with different densities of fibres allows an optimal compromise to be reached between the aforementioned requirements, combined with an adequate resistance of the material, particularly on the layer destined to enter into contact with the surface to be cleaned. More precisely:
- said at least one support and liquid retaining layer, made with more densely and compactly distributed fibres, acts both as a reservoir for the cleaning fluid and as a support layer.
- said at least one cleaning layer (or active layer), on the other hand, acts as a means for controlled release of the liquid (due to its areas with a lower density of fibres and to the quality thereof, different from that of the support layer) and said layer is mechanically reinforced by the presence of said areas of bonding or of fixing to the support layer.

Preferred ways of performing the method and of producing the cloth of the present invention are apparent from the following figures, which illustrate non-limiting embodiments thereof:
- Figure 1 shows a perspective view of an example of non-woven fabric suitable for producing the cloth of the invention;
- Figure 2 shows the material of Figure 2 in cross section;
- Figure 3 diagrammatically shows the method for producing the material of the preceding figures;
- Figure 4 shows an example of the pattern of the jets of water used to compress the support layer of material of the preceding figures; and
- Figures 5 to 9 show examples of the lines of bonding of the cleaning layer to the support layer of the material of the invention.

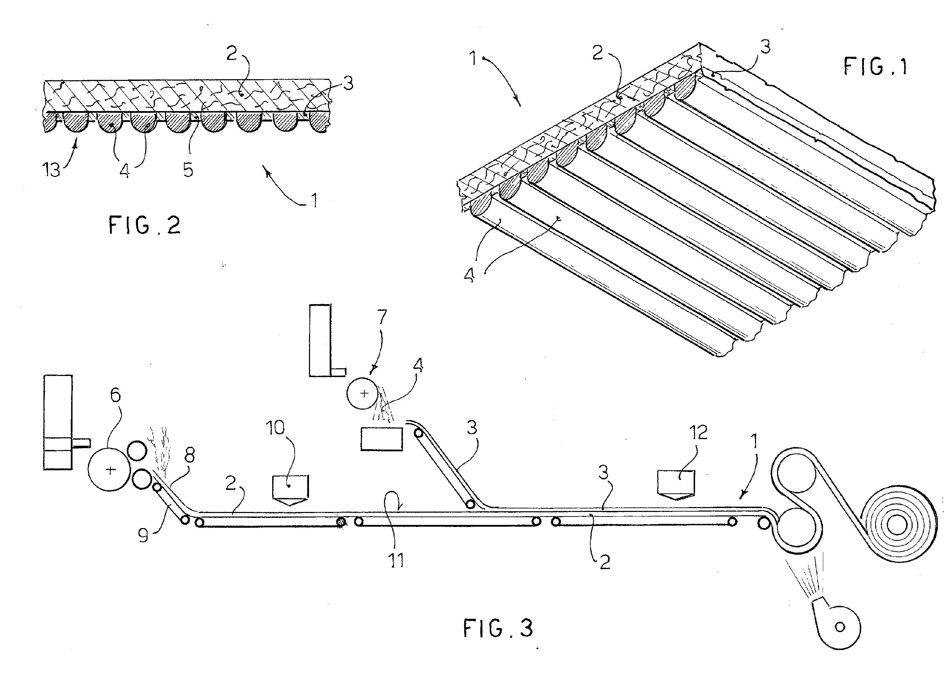

The non-woven fabric material of the invention is particularly suitable for producing the moistened cloth 1 of Figure 1, in particular for cleaning floors. In the shown example, this material consists essentially of a base or support layer 2, on a surface of which a cleaning layer 3 is fixed (Figure 2).

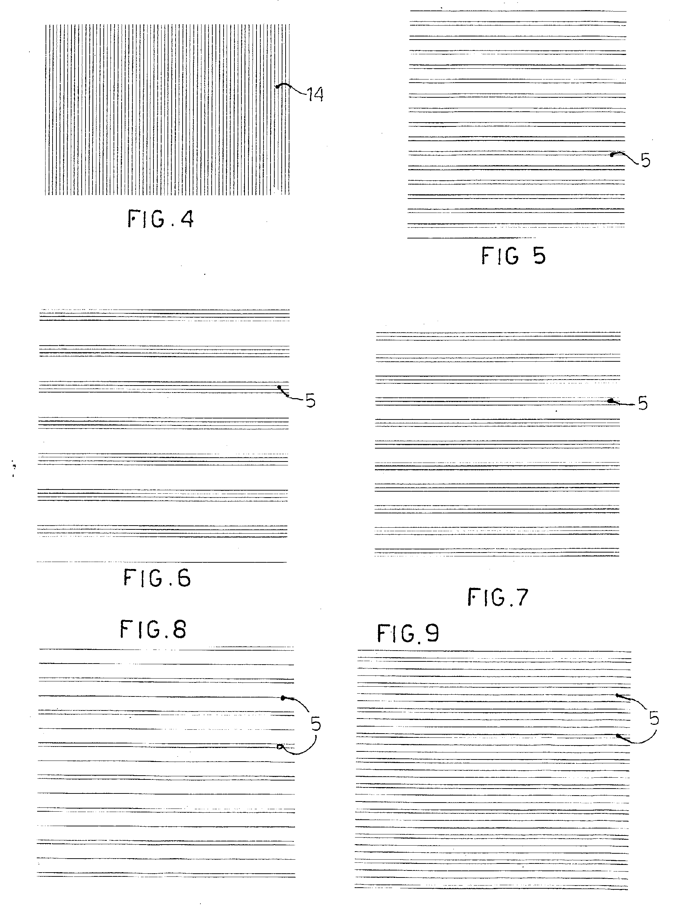

In particular the support layer 2 is formed by a non-woven fabric material, composed of fibres 8 of viscose, cellulose, mixed viscose and polyester, cotton and the like, destined to be impregnated with a cleaning fluid. Viscose fibres with different deniers are preferably used, formed of 50% of 2.9-denier fibres and of 50% of 3.5-denier fibres. A layer 2 of non-woven fabric material is thus formed with a weight of 65-70 g/m², consisting of 70% of viscose fibres and 30% of polyester fibres. This combination of fibres was subsequently compressed by treatment with high-pressure jets of water, for example according to the patterns 14 of Figure 4, so as to produce a strong, uniform structure, suitable both as a support for the subsequent layer and as a reservoir for the cleaning fluid.

A cleaning layer 3, in turn consisting of a non-woven fabric material formed of fibres 4, is subsequently fixed on a surface of this layer 2. At least 10% of these fibres 4 are advantageously disposed transversally or obliquely with respect to the axis of said fabric, or with respect to the direction of travel of the relative support layer 2. These fibres 4 are of a polyolefinic or in any case synthetic nature, preferably polyester, and have a specific weight of about 40 g/m². An example of the composition of this cleaning layer 3 comprises 80% 1.5-denier of polyester fibres with a length of 38 mm, and 20% of microfibres.

The above described cleaning layer 3 is fixed to the support layer 2 at bonding lines or areas 5, formed by using the water intertwining or binding method, with the use of differently distributed sprayer nozzles so as to create different patterns, some examples of which are shown in figures 5 to 9.

Material 1 is prepared with the method shown diagrammatically in Figure 3. According to this method, the viscose and polyester fibres 8 which bring to the formation of the support layer 2 are fed, from a carding system 6, onto a conveyor belt 9 and here suitably cohesioned, for example with high-pressure water jets 10.

From a subsequent carding system 7, preferably with air forming of one or more layers of fibres, the polyester fibres 4, in turn distributed with a high degree of randomisation, are fed over the free surface 11 of the previously formed layer 2. At this stage, the fibres 4 are in reciprocal contact at their points of crossing, With a subsequent bonding operation of these fibres 4 over the surface 11 of the layer 2, bonding lines 5 are formed by means of a device 12 with high-pressure water jets. In this bonding operation final interlacing of fibres 4 is achieved, with the formation of the cleaning layer 3 fixed on the support layer 2, at the bonding lines 5 preferably disposed in an alternating fashion with respect to corresponding areas 13 of the layer with a low density of fibres 4.

The material forming the cloth thus obtained therefore has:
- a support layer 2, destined to be impregnated with cleaning fluid,
- a cleaning layer 3, fixed to the support layer 2 and forming part of the material that enters into contact with the floor; this material acts as a controlled release layer for the fluid with which the layer 2 is impregnated, where this control is exerted thanks to the nature of the fibres 4 of this layer 3, which are different from those 8 which form the layer 2, and to the areas 13 with a low density of fibres; in this manner, besides ensuring said slowed release control of the cleaning fluid, an efficient dirt-capturing action is also guaranteed; furthermore, the bonding areas 5 of these fibres 8 on the layer 2 of the cloth 1 gives the latter the necessary firmness.

The material according to the invention could also be made up of a larger number of layers, with respect to the preferred embodiment described above, while still coming within the scope of the following claims. The bonding areas 5 can also have different shapes from those described and illustrated.

## Claims

1. A method for the production of a non-woven fabric material, **characterised in that** it provides for the formation of at least one fibrous support layer (2), with a greater density of fibres, and of at least one fibrous cleaning layer (3), with a lower density of fibres than the preceding one and integral therewith.

2. A method as claimed in claim 1, **characterised in that** said at least one support layer (2) is obtained by compressing a body of fibres (8), on a surface (11) of said layer (2) fibres (4) forming said at least one cleaning layer (3) and fixed to said layer (2) at bonding areas (5) being distributed.

3. A method as claimed in claim 2, **characterised in that** said bonding areas (5) are formed with high-pressure water jets on said body of fibres (4) of said at least one cleaning layer (3).

4. A method as claimed in claims 2 and 3, **characterised in that** at least 10% of the fibres (4) of said at least one cleaning layer (3) are disposed transversally or obliquely with respect to the axis of said non-woven fabric material (1).

5. A method as claimed in one or more of the preceding claims, **characterised in that** said fibres (8) of said at least one support layer (2) are compressed with the use of high-pressure water jets.

6. Multi-layer non-woven fabric material obtained with the method claimed in one or more of the preceding claims, **characterised in that** it comprises at least one support layer (2), suitable to be impregnated with cleaning fluid, to which is fixed, at bonding areas (5), at least one cleaning layer (3) which produces controlled release of said cleaning fluid with which said at least one support layer (2) is impregnated.

7. Material as claimed in claim 6, **characterised in that** said bonding areas (5) are in the form of spaced out lines.

8. Material as claimed in claims 6 or 7, **characterised in that** said bonding areas or lines (5) are disposed alternating with areas (13) of said at least one layer (3) with a low density of fibres (4).

9. Material as claimed in one or more of the preceding claims, **characterised in that** said at least one support layer (2) is formed by viscose, cellulose, cotton or mixed viscose and polyester fibres (8).

10. Material as claimed in claim 9, **characterised in that** said at least one support layer (2) consists of 70% of viscose fibres and 30% of polyester fibres.

11. Material as claimed in claim 10, **characterised in that** 50% of said fibres (8) are 2.9-denier and the remaining 50% are 3.5-denier.

12. Material as claimed in one or more of the preceding claims, **characterised in that** said at least one cleaning layer (3) is formed by fibres (4) of synthetic material.

13. Material as claimed in claim 12, **characterised in that** said synthetic material is polyester.

14. Material according to claim 13, **characterised in that** it consists of 80% of 1.5-denier fibres and of 20% of microfibres.

15. A moistened cloth, in particular for cleaning floors, **characterised in that** it is produced with the non-woven fabric material as claimed in one or more of claims 6 to 14.
